# EUROPEAN PATENT SPECIFICATION

(11) **EP 3 973 805 B1**
(45) Date of publication and mention of the grant of the patent: **02.07.2025**
(21) Application number: 21199610.3
(22) Date of filing: 28.09.2021
(51) Int. Cl.: A43B 5/00, B29D 35/00, B29D 35/12

(54) **MOULD FOR CLIMBING SHOES**
FORM FÜR KLETTERSCHUHE
MOULE POUR CHAUSSURES D'ESCALADE

(30) Priority: 29.09.2020 IT 202000005449 U
(43) Date of publication of application: 30.03.2022
(73) Proprietor: Caruso, Paolo, 06041 Cerreto di Spoleto (PG) (IT)
(72) Inventor: Caruso, Paolo, 06041 Cerreto di Spoleto (PG) (IT)
(74) Representative: Bellomia, Paolo

(56) References cited:
- EP-A1- 2 274 994
- EP-A1- 3 415 025
- CN-U- 208 724 982
- US-A1- 2002 152 642

## Description

This invention relates to a mould for climbing shoes. In particular, the mould is used for climbing shoes which can be used both for rock climbing and for alpine climbing, as well as for bouldering and for indoor structures. The invention also relates to a preformed shoe thanks to the above-mentioned mould.

There are currently two types of processing for making climbing shoes.

A first type of processing, generally the most commonly used, comprises gluing two parts: the sole and the side bands.

The second solution comprises making a single block of rubber which comprises at the same time the sole and the side bands (the rubber therefore originates preformed). Document US 2002/152642 Al discloses a climbing shoe with a sole produced through a moulding process comprising elements to shape the underside of the sole to allow for specific mechanical properties.

The rubber of this single block is made with a flat shape, in particular in the zone of the ball of the foot, which comes into contact with the foot itself, as well as the side parts (that is to say, the bands).

The traditional systems, in order to be better fitted, have various additional intersoles and different shapes of the shoe, as well as further additional rubber ties. Some companies have for many years also used parts of the bent sole to form the bands or to reinforce them.

In the current systems, the rubber of the sole is glued on the intersoles.

Some of them are convex with the aim of obtaining convex shapes also for the sole, but they are always additional applications to the flat sole.

The result is that the foot is held and bent in a poor or unnatural manner, with poor results in terms of comfort and performance.

In light of the above, the technical purpose of the invention is to provide a mould for climbing shoes which is able to overcome the drawbacks of the prior art.

An aim of the invention is therefore to provide a mould for climbing shoes which allows the foot to be kept in a natural position, also reinforcing the weak points.

A further aim of the invention is to provide a mould for climbing shoes which allows the natural work of the foot to be helped, improved and reinforced.

A further aim of the invention is therefore to provide a mould for climbing shoes which improves the comfort and the general performance of the user.

The technical purpose indicated and the aims specified are substantially achieved by a mould for climbing shoes comprising the technical features described in one or more of the accompanying claims. The dependent claims correspond to possible embodiments of the invention.

The above-mentioned technical purpose and the preset aims are also achieved by a climbing shoe comprising the above-mentioned mould.

Further features and advantages of the invention are more apparent in the non-limiting description which follows of a non-limiting embodiment of a mould for climbing shoes.

The description is set out below with reference to the accompanying drawings which are provided solely for purposes of illustration without restricting the scope of the invention and in which:

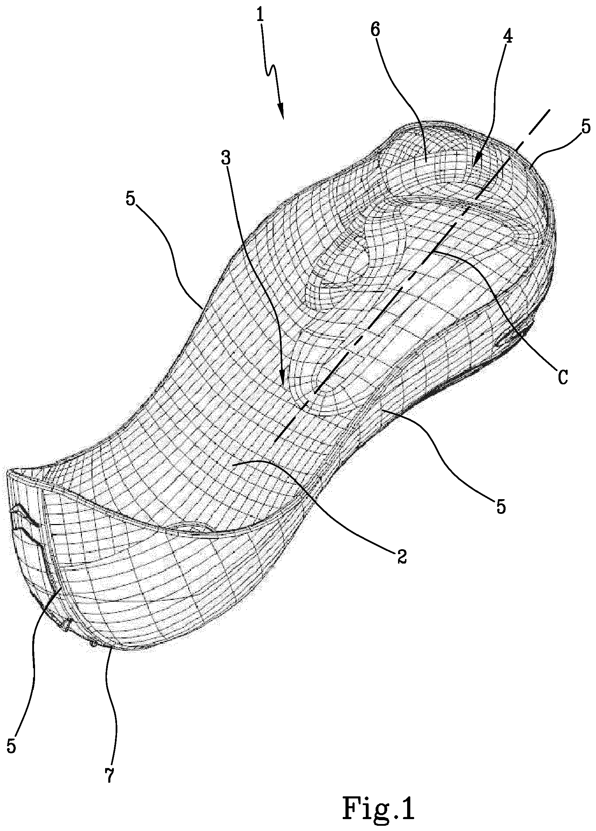

- Figure 1 is a perspective view of a mould according to the invention;

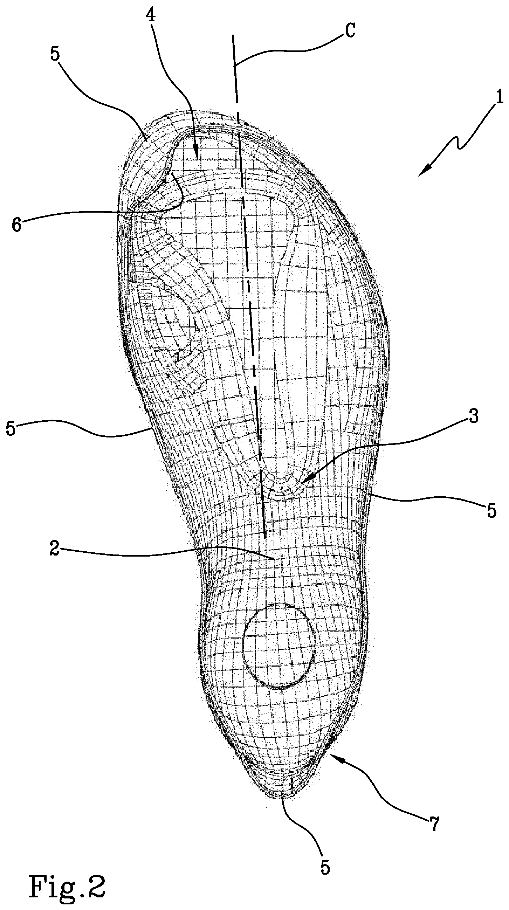

- Figure 2 is a top view of the mould according to the invention;

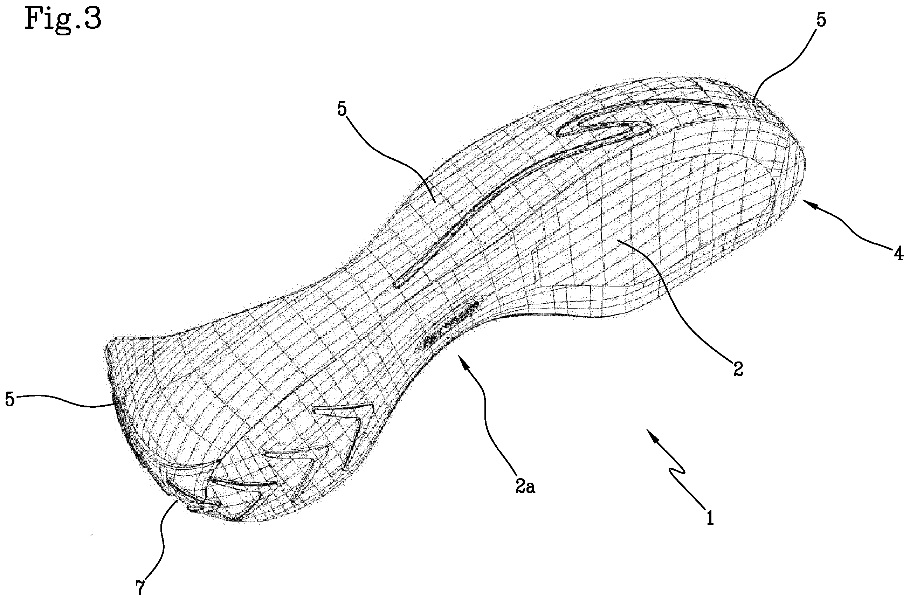

- Figure 3 is a perspective view from below of the mould according to the invention.

With reference to the accompanying drawings, the numeral 1 denotes in its entirety a mould for climbing shoes which, for simplicity of description, will hereafter be referred to as the mould 1.

The mould 1 comprises a sole 2 forming a supporting portion of the wearer's foot. The sole 2 comprises zones of convexity with a greater thickness configured to maintain the position of the foot being gripped.

The convexity zones extend in a central portion 3 of the sole 2 along a central line "C" of the ball of the foot and in a toe portion 4 corresponding to a portion below the toes of the wearer's foot.

Preferably, the convexity in the toe portion 4 below the toes has a maximum thickness of between 1.5 and 10.5 mm (extending beyond the base thickness of the sole) and decreasing away from said maximum thickness.

Preferably, the maximum thickness of the convexity in the toe portion is 4.3 mm.

The convexity extending along the centre line "C" of the ball of the foot extends in a portion between the toes and the planar arch having a central thickness of between 1 and 10 mm (extending beyond the base thickness of the sole) and decreasing towards the zone of the planar arch.

Preferably, the maximum thickness of the convexity extending along the centre line of the ball of the foot is 3.5 mm.

Preferably, the sole 2 has a base thickness of between 3 and 6 mm.

Preferably, the base thickness of the sole 2 is 4.2 mm.

Preferably, the sole 2 has a concave outer portion 2a with concavity variability of between 1 mm and 10 mm.

Preferably, the sole 2 may be flat.

In other words, in the toe portion 4 the greatest thickness is defined at the centre of the toes, between the first toe (big toe) and the middle toe. This thickness may decrease towards the lateral edges of the sole or remain almost constant. The point of greatest thickness is 4.3 mm but variants have been made, to cover the various climbing requirements, with thicknesses which are both greater and less, between a minimum of 1.5 mm and a maximum of 10.5 mm.

With regard to the centre line "C", the greatest thickness is defined along the centre and longitudinal line of the foot (between the toes and the plantar arch) and decreases towards the lateral edges of the sole 2; the central and longitudinal thickness gradually decreases towards the zone of the plantar arch. The point of greatest thickness is 3.5 mm but variants have been made, to cover the various climbing requirements, with thicknesses which are both greater and less, between a minimum of 1.0 mm and a maximum of 10.0 mm.

The mould 1 also comprises side bands 5 having different thicknesses designed to fill a space of the mould 1 for forming a lateral support for a wearer's foot.

Preferably, each side band 5 has a base thickness of between 1 and 2.4 mm.

Preferably, each side band 5 has different thicknesses, extending beyond the base thickness, of between 0.4 and 1.5 mm.

Preferably, each side band 5 has a height of between 0.7 and 3 cm around the tip.

In the inner and outer lateral parts of the planar arch the bands have a height of between 2 and 4.5 cm.

Preferably, each side band 5 has a tab of 1.3 cm.

Preferably, in the toe portion 4 of the mould 1, the corresponding side band 5 is shaped in such a way as to occupy the toes on lateral edges.

In other words, the side band 5 has a different thickness in some zones. In particular, it has a greatest thickness in the part alongside the big toe, as well as in the zone for containing the tip of the second, third and fourth toes. In these zones, the thickness is greater than that of the other parts of the side band and is between 0.4 mm and 1.5 mm. These thicknesses are added to the base thickness of the band which is between 1.0 mm and 2.4 mm.

Preferably, the toe portion 4 of the mould 1 defines a housing 6 for the toes of the foot and wherein the respective side band is positioned, relative to the sole 2, with an angle of between 80° and 105°.

Preferably, the side band 5 is positioned at an angle of 90° relative to the sole 2.

Advantageously, the toe portion 4 makes it possible to obtain a natural housing of the big toe and of the others toes thanks to the possibility of precisely positioning the toes on the perpendicular of the front part of the rubber, in particular above the final edge of the sole 2 and of the toe portion 4.

In use, the big toe and the other toes of the foot position themselves on the perpendicular of the toe and edge of the sole 2. In order to obtain this result, the side band 5 of the front zone of the sole 2 (the toe portion 4) is set at an angle of 90 degrees with respect to the final part of the sole 2 itself. Variants have been made, to cover the various climbing requirements, with angles both greater and less, ranging from a minimum of 80 degrees to a maximum of 105 degrees. Excluding the thickness of the sole 2, the side band 5 of the tip rises vertically for 1.3 cm, but variants were made with the band both higher and lower, ranging between a height variable between 0.7 cm and 2.0 cm. Above these heights, the band may end. Alternatively, the side band 5 may be extended with a curve towards the inside of the foot designed to contain, at least partly, also the upper part of the tip of the foot.

Preferably, the sole 2 comprises a heel 7 with a greater thickness defining a net angle with a respective side band 5 extending externally towards the outside of the mould 1.

This shape of the heel 7 makes it possible to obtain a zone of the mould 1 designed to rest on the rock supports.

Preferably, the net angle of the heel 7 is a net angle defined between the sole 2 and the respective side band 5 having an amplitude of between 80° and 120°. Preferably, the above-mentioned net angle has an amplitude of 105°.

Preferably, the heel 7 has a thickness of between 3.5 and 10 mm.

Preferably, the heel 7 has a thickness of 7 mm.

In other words, the heel 7 is designed to have a greater thickness of rubber with a net angle in the inner part of the heel 7 in order to obtain a zone designed to be rested on the rock supports.

Preferably, the side bands 5 have, in the rear containing portion of the heel 7, a height of between 2.5 and 8.5 cm.

Preferably, the mould 1 is made of rubber by means of an injection or compression system.

In other words, thanks to the injection or compression system the rubber adopts the planned shape and the desired various thicknesses. In particular, the mould 1 acquires the convex shapes and different thicknesses, especially in the front zone (ball of the foot) and under the toes of the foot, that is, in the zone of the sole, the zone in contact with the foot, and in the side bands 5. Convexities and variations in thickness are therefore produced which are designed to completely or partly fill the empty spaces present in the parts of the foot which are not in contact with the supporting surface, in particular in the zone under the joints of the toes and along the central and longitudinal axis of the ball of the foot.

For this reason, the rubber is "preformed" in the mould 1. The rubber therefore maintains the "memory" of the initial shape: thanks to this feature and the different thicknesses of the rubber it is possible to keep the foot in a natural position, achieving greater performance, especially when the force is applied on the supports and in the different climbing situations.

The invention also relates to a climbing shoe comprising the above-mentioned mould 1.

Advantageously, this invention allows the foot to be maintained in a natural position and in a gripping arrangement.

Advantageously, the invention allows greater comfort to be obtained compared with prior art climbing shoes.

Advantageously, the invention makes it possible to obtain higher performance levels.

Advantageously, this invention allows a greater stability of the foot relative to the rubber to be obtained.

Advantageously, the invention allows the sole 2 to be better supported in the emptier zones of the foot.

Advantageously, the mould 1 is preformed and therefore with a "memory" which makes it less subject to deformation.

Advantageously, the possible variants of the invention relate to variants of thicknesses and shape of the thickness of the rubber and are always evolutions of the general principle based on the convexity of the rubber and on the different thicknesses which can be made in a more or less marked and evident manner, depending on what is to be achieved in the various climbing styles.

## Claims

1. A mould (1) for climbing shoes comprising a sole (2) forming a supporting portion of the sole of the wearer's foot and comprising zones of convexity with a greater thickness configured to maintain the position of the foot being gripped; **characterised in that** the mould comprises side bands (5) having different thicknesses designed to fill a space of the mould (1) for forming a lateral support for a wearer's foot.

2. The mould (1) according to claim 1, wherein said convexity zones extend in a central portion of the sole (2) along a central line (C) of the ball of the foot and in a toe portion (4) corresponding to a portion below the toes of the foot.

3. The mould (1) according to claim 2, wherein said convexity in the toe portion (4) positioned below the toes has a maximum thickness of between 1.5 and 10.5 mm and a decreasing trend away from said maximum thickness.

4. The mould (1) according to claim 3, wherein said maximum thickness of the convexity in the toe portion (4) is 4.3 mm.

5. The mould (1) according to any one of claims 2 to 4, wherein said convexity extending along the central line (C) of the ball of the foot extends in a portion between the toes and the planar arch having a central thickness of between 1 and 10 mm and decreasing towards the zone of the planar arch.

6. The mould (1) according to claim 5, wherein said maximum thickness of the convexity extending along the central line (C) of the ball of the foot is 3.5 mm.

7. The mould (1) according to any one of the preceding claims, wherein said sole (2) has a base thickness of between 3 and 6 mm.

8. The mould (1) according to claim 7, wherein said base thickness of the sole (2) is 4.2 mm.

9. The mould (1) according to any one of the preceding claims, wherein said sole (2) has a concave outer portion with concavity variability of between 1 mm and 10 mm.

10. The mould (1) according to the preceding claims, wherein each side band (5) has a base thickness of between 1 and 2.4 mm.

11. The mould (1) according to the preceding claims, wherein each side band (5) has different thicknesses, extending beyond the base thickness, of between 0.4 and 1.5 mm.

12. The mould (1) according to any one of the preceding claims, wherein each side band (5) has a height of between 0.7 and 3 cm.

13. The mould (1) according to claim 12, wherein each side band (5) has a tab of 1.3 cm.

14. The mould (1) according to any one of the preceding claims, wherein each side band (1) has a height of between 2 and 4.5 cm in the inner and outer lateral parts of the planar arch.

15. The mould (1) according to any one of the preceding claims, wherein, in a toe portion (4) of the mould (1), the corresponding side band (1) is shaped in such a way as to occupy the toes on lateral edges.

16. The mould (1) according to any one of the preceding claims, wherein a toe portion (4) of the mould (1) defines a housing (6) for the toes of the foot and wherein the respective band is positioned, relative to the sole (2), with an angle of between 80° and 105°.

17. The mould (1) according to claim 16, wherein the side band (5) of the toe portion (4) is positioned relative to the sole (2) at an angle of 90°.

18. The mould (1) according to any one of the preceding claims, wherein said sole (2) comprises a heel (7) with a greater thickness defining a net angle with a respective side band (5) extending externally towards the outside of the mould (1).

19. The mould (1) according to claim 18, wherein each side band (5) has a height of between 2.5 and 8.5 cm in the portion containing the heel (7).

20. The mould (1) according to claim 18 or 19, wherein the net angle of the heel (7) is a net angle defined between the sole (2) and the respective side band (7) having an amplitude of between 80° and 120°.

21. The mould (1) according to claim 20, wherein said net angle has an amplitude of 105°.

22. The mould (1) according to any one of claims 17-21, wherein the heel (7) has a thickness of between 3.5 and 10 mm.

23. The mould (1) according to claim 22, wherein said heel (7) has a thickness of 7 mm.

24. The mould (1) according to any one of the preceding claims, wherein said mould (1) is made of rubber by means of an injection or compression system.

## Patentansprüche

1. Form (1) für Kletterschuhe, umfassend eine Sohle (2), die einen stützenden Abschnitt der Fußsohle des Trägers bildet und Außenwölbungszonen mit einer größeren Dicke umfasst, die ausgelegt sind, um die Position des gegriffenen Fußes aufrechtzuerhalten, **dadurch gekennzeichnet, dass** die Form Seitenbänder (5) umfasst, die unterschiedliche Dicken aufweisen, die ausgestaltet sind, um einen Bereich der Form (1) zu füllen, um eine seitliche Stütze für den Fuß des Trägers zu bilden.

2. Form (1) nach Anspruch 1, wobei sich die Außenwölbungszonen in einem mittleren Abschnitt der Sohle (2) entlang einer Mittellinie (C) des Fußballens und in einem Zehenabschnitt (4), der einem Abschnitt unterhalb der Fußzehen entspricht, erstrecken.

3. Form (1) nach Anspruch 2, wobei die Außenwölbung im Zehenabschnitt (4), der unterhalb der Zehen positioniert ist, eine maximale Dicke zwischen 1,5 und 10,5 mm und einen abnehmenden Trend wegführend von der maximalen Dicke aufweist.

4. Form (1) nach Anspruch 3, wobei die maximale Dicke der Außenwölbung im Zehenabschnitt (4) 4,3 mm beträgt.

5. Form (1) nach einem der Ansprüche 2 bis 4, wobei sich die entlang der Mittellinie (C) des Fußballens erstreckende Außenwölbung in einem Abschnitt zwischen den Zehen und dem Fußgewölbe erstreckt, aufweisend eine mittige Dicke zwischen 1 und 10 mm und abnehmend hinführend zur Zone des Fußgewölbes.

6. Form (1) nach Anspruch 5, wobei die maximale Dicke der sich entlang der Mittellinie (C) des Fußballens erstreckenden Außenwölbung 3,5 mm beträgt.

7. Form (1) nach einem der vorhergehenden Ansprüche, wobei die Sohle (2) eine Basisdicke zwischen 3 und 6 mm aufweist.

8. Form (1) nach Anspruch 7, wobei die Basisdicke der Sohle (2) 4,2 mm beträgt.

9. Form (1) nach einem der vorhergehenden Ansprüche, wobei die Sohle (2) einen gewölbten äußeren Abschnitt mit einer Außenwölbungsvariabilität zwischen 1 und 10 mm aufweist.

10. Form (1) nach den vorhergehenden Ansprüchen, wobei ein jedes Seitenband (5) eine Basisdicke zwischen 1 und 2,4 mm aufweist.

11. Form (1) nach den vorhergehenden Ansprüchen, wobei ein jedes Seitenband (5) unterschiedliche Dicken, sich erstreckend jenseits der Basisdicke, zwischen 0,4 und 1,5 mm aufweist.

12. Form (1) nach einem der vorhergehenden Ansprüche, wobei ein jedes Seitenband (5) eine Höhe zwischen 0,7 und 3 cm aufweist.

13. Form (1) nach Anspruch 12, wobei ein jedes Seitenband (5) eine Lasche von 1,3 cm aufweist.

14. Form (1) nach einem der vorhergehenden Ansprüche, wobei ein jedes Seitenband (1) eine Höhe zwischen 2 und 4,5 cm in den inneren und äußeren seitlichen Teilen des Fußgewölbes aufweist.

15. Form (1) nach einem der vorhergehenden Ansprüche, wobei das entsprechende Seitenband (1) in einem Zehenabschnitt (4) der Form (1) so ausgeformt ist, dass es die Zehen auf seitlichen Rändern besetzt.

16. Form (1) nach einem der vorhergehenden Ansprüche, wobei ein Zehenabschnitt (4) der Form (1) ein Gehäuse (6) für die Fußzehen definiert, und wobei das jeweilige Band relativ zur Sohle (2) mit einem Winkel zwischen 80° und 105° positioniert ist.

17. Form (1) nach Anspruch 16, wobei das Seitenband (5) des Zehenabschnitts (4) relativ zur Sohle (2) in einem Winkel von 90° positioniert ist.

18. Form (1) nach einem der vorhergehenden Ansprüche, wobei die Sohle (2) einen Absatz (7) mit einer größeren Dicke umfasst, definierend einen Nettowinkel mit einem jeweiligen Seitenband (5), sich erstreckend außenseitig hinführend zur Außenseite der Form (1).

19. Form (1) nach Anspruch 18, wobei ein jedes Seitenband (5) eine Höhe zwischen 2,5 und 8,5 cm im den Absatz (7) enthaltenden Abschnitt aufweist.

20. Form (1) nach Anspruch 18 oder 19, wobei der Nettowinkel des Absatzes (7) ein Nettowinkel ist, der zwischen der Sohle (2) und dem jeweiligen Seitenband (7) definiert ist, aufweisend eine Weite zwischen 80° und 120°.

21. Form (1) nach Anspruch 20, wobei der Nettowinkel eine Weite von 105° aufweist.

22. Form (1) nach einem der Ansprüche 17-21, wobei der Absatz (7) eine Dicke zwischen 3,5 und 10 mm aufweist.

23. Form (1) nach Anspruch 22, wobei der Absatz (7) eine Dicke von 7 mm aufweist.

24. Form (1) nach einem der vorhergehenden Ansprüche, wobei die Form (1) mittels eines Spritzgieß- oder Drucksystems aus Kautschuk gefertigt ist.

## Revendications

1. Moule (1) pour chaussures d'escalade, comprenant une semelle (2) formant une portion de support de la semelle du pied du porteur et comprenant des zones de convexité avec une plus grande épaisseur configurées pour maintenir la position du pied étant en prise ; **caractérisé en ce que** le moule comprend des bandes latérales (5) ayant des épaisseurs différentes conçues pour remplir un espace du moule (1) pour former un support latéral pour un pied d'un porteur.

2. Moule (1) selon la revendication 1, dans lequel lesdites zones de convexité s'étendent dans une portion centrale de la semelle (2) le long d'une ligne centrale (C) de la plante du pied et dans une portion de pointe (4) correspondant à une portion sous les orteils du pied.

3. Moule (1) selon la revendication 2, dans lequel ladite convexité dans la portion de pointe (4) positionnée sous les orteils a une épaisseur maximale comprise entre 1,5 et 10,5 mm et une tendance décroissante à partir de ladite épaisseur maximale.

4. Moule (1) selon la revendication 3, dans lequel ladite épaisseur maximale de la convexité dans la portion de pointe (4) est de 4,3 mm.

5. Moule (1) selon l'une quelconque des revendications 2 à 4, dans lequel ladite convexité s'étendant le long de la ligne centrale (C) de la plante du pied s'étend dans une portion entre les orteils et la voûte plantaire ayant une épaisseur centrale comprise entre 1 et 10 mm et diminuant vers la zone de la voûte plantaire.

6. Moule (1) selon la revendication 5, dans lequel ladite épaisseur maximale de la convexité s'étendant le long de la ligne centrale (C) de la plante du pied est de 3,5 mm.

7. Moule (1) selon l'une quelconque des revendications précédentes, dans lequel ladite semelle (2) a une épaisseur de base comprise entre 3 et 6 mm.

8. Moule (1) selon la revendication 7, dans lequel ladite épaisseur de base de la semelle (2) est de 4,2 mm.

9. Moule (1) selon l'une quelconque des revendications précédentes, dans lequel ladite semelle (2) a une portion extérieure concave avec une variabilité de concavité comprise entre 1 mm et 10 mm.

10. Moule (1) selon les revendications précédentes, dans lequel chaque bande latérale (5) a une épaisseur de base comprise entre 1 et 2,4 mm.

11. Moule (1) selon les revendications précédentes, dans lequel chaque bande latérale (5) a des épaisseurs différentes, s'étendant au-delà de l'épaisseur de base, comprises entre 0,4 et 1,5 mm.

12. Moule (1) selon l'une quelconque des revendications précédentes, dans lequel chaque bande latérale (5) a une hauteur comprise entre 0,7 et 3 cm.

13. Moule (1) selon la revendication 12, dans lequel chaque bande latérale (5) a une languette de 1,3 cm.

14. Moule (1) selon l'une quelconque des revendications précédentes, dans lequel chaque bande latérale (1) a une hauteur comprise entre 2 et 4,5 cm dans les parties latérales intérieure et extérieure de la voûte plantaire.

15. Moule (1) selon l'une quelconque des revendications précédentes, dans lequel, dans une portion de pointe (4) du moule (1), la bande latérale (1) correspondante est formée de manière à occuper les orteils sur les bords latéraux.

16. Moule (1) selon l'une quelconque des revendications précédentes, dans lequel une portion de pointe (4) du moule (1) définit un logement (6) pour les orteils du pied et dans lequel la bande respective est positionnée, par rapport à la semelle (2), avec un angle compris entre 80° et 105°.

17. Moule (1) selon la revendication 16, dans lequel la bande latérale (5) de la portion de pointe (4) est positionnée par rapport à la semelle (2) à un angle de 90°.

18. Moule (1) selon l'une quelconque des revendications précédentes, dans lequel ladite semelle (2) comprend un talon (7) avec une plus grande épaisseur définissant un angle net avec une bande latérale (5) respective s'étendant extérieurement vers l'extérieur du moule (1).

19. Moule (1) selon la revendication 18, dans lequel chaque bande latérale (5) a une hauteur comprise entre 2,5 et 8,5 cm dans la portion contenant le talon (7).

20. Moule (1) selon la revendication 18 ou 19, dans lequel l'angle net du talon (7) est un angle net défini entre la semelle (2) et la bande latérale (7) respective ayant une amplitude comprise entre 80° et 120°.

21. Moule (1) selon la revendication 20, dans lequel ledit angle net a une amplitude de 105°.

22. Moule (1) selon l'une quelconque des revendications 17-21, dans lequel le talon (7) a une épaisseur comprise entre 3,5 et 10 mm.

23. Moule (1) selon la revendication 22, dans lequel ledit talon (7) a une épaisseur de 7 mm.

24. Moule (1) selon l'une quelconque des revendications précédentes, dans lequel ledit moule (1) est réalisé en caoutchouc au moyen d'un système d'injection ou de compression.
